# EUROPEAN PATENT APPLICATION

(11) **EP 2 674 884 A1**
(43) Date of publication of application: **18.12.2013**
(21) Application number: 11858235.2
(22) Date of filing: 29.12.2011
(51) Int. Cl.: G06F 17/40, G06F 17/30

(54) **METHOD, SYSTEM AND COMPUTER-READABLE RECORDING MEDIUM FOR ADDING A NEW IMAGE AND INFORMATION ON THE NEW IMAGE TO AN IMAGE DATABASE**

(30) Priority: 07.02.2011 KR 20110010624
(71) Applicant: Olaworks, Inc., Seoul 135-919 (KR)
(72) Inventor: KIM, Tae Hoon, Seongnam-si Gyeonggi-do 463-708 (KR); PARK, Min Je, Seongnam-si Gyeonggi-do 462-080 (KR); CHOI, Song Ki, Seoul 156-091 (KR)
(74) Representative: Goddar, Heinz J.
(86) International application number: PCT/KR2011/010348
(87) International publication number: WO 2012/108623

(57) **Abstract**

According to one embodiment of the present invention, provided is a method comprising the following steps: (a) matching an image prestored in an image database with a query image so as to detect whether or not an image similar to the query image exists in the image database; (b) storing the query image in an unrecognized image database if an image similar to the query image does not exist; (c) collecting images related to each other based on the similarity between images stored in the unrecognized image database so as to construct an image group; and (d) comparing a portion of an image contained in a specific image group from among the constructed image groups with a specific input image when a specific image and tag information on the specific image are inputted, and, if it is determined that the portion of the image has a similarity that is higher than a preset threshold value, automatically adding the relevant image to the image database together with the input tag information.

## Description

### Technical Field

The present invention relates to a method, a system and a computer-readable recording medium for adding a new image and its information into the image database. More specifically, the present invention relates to the method, the system and the computer-readable recording medium for adding a new image and its information into an image database, unrecognized images that are not matched upon searching queried images input in an image database are stored and grouped, and they are verified using images automatically acquired by methods including web crawling (or images manually provided by a user) and tags so that the unrecognized image and their tag information may be added to an image database more easily.

### Background Technology

Recently, with the development of telecommunication technology and the wide-spread use of the Internet, a variety of search methods are adopted. For example, computer users may search for information by using the Internet (more accurately, web services) in addition to getting the information directly from a dictionary or asking others who are familiar with the information. That is, after accessing a web server that provides a search service by using a browser and entering a keyword relating to the information to be found, a user may be provided with the search service interfaced with the web server.

A variety of search services have been developed and, particularly in Korea, searches for knowledge have become of greater importance, and utilization of the search service for getting information tends to be increasing. As the search service is a function used by many users and visits of users to a website are directly connected to advertising profits, many portal sites offer such search functions.

The websites providing such search services have increased in quantity but most of them have offered the same search services centered on text including keywords. Thus, they fail to fulfill the desire of users who want to get the information more easily by using more diverse methods.

In particular, conventionally, if the information desired consisted of not text but an image, one would have to guess a keyword that might be associated with the image and then enter the keyword to perform a search. Of course, only the image results could be shown by setting a search scope but such an image search itself is merely based on the keyword text.

The problem of such a scheme is that, if a user does not know what the identity of the image is, the user cannot easily guess a related keyword so the frequency of entering keywords increases and that desired information may not be searched easily.

Accordingly, to solve the problem, an image retrieval system had been developed to allow a user, etc. who wants to get information on a specific image to search by using not text but the image itself.

However, the existing image retrieval system had the following problems: First, in order to provide an image search system, an image database including plenty of data is required. With the image database not including sufficient data, even if a queried image was inputted, information on search results could not be provided, and the images which failed to be matched to the queried images, that is, the unrecognized images, came to be abandoned without being recycled, which was a problem. In such a case, until the unrecognized images were reflected manually in the image database, the information on the search results of the unrecognized images still could not be provided even if the searches were repeated.

### Detailed Description of the Invention

### Technical Task

It is an objective of the present invention to solve all the problems mentioned above.

It is another objective of the present invention to separately store and group unrecognized images that do not match upon searching a queried image by referring to an image database for search, and to verify them using an image automatically acquired by methods including web crawling (or images manually provided by a user) and its tag information (that is, information corresponding to the image) so that the unrecognized images and their tag information may be added into the image database more easily.

### Means for Task Resolution

To achieve the above objectiveness, a representative configuration of the present invention is described below:

According to one aspect of the present invention, there is provided a method for adding a new image and its information into an image database comprising (a) a step in which, if a queried image is inputted, a pre-stored image in the image database is matched with the queried image to research whether there are any images similar to the queried image in the image database; (b) a step in which, if there is no image similar to the queried image based on the search result, the queried image is stored in a database for unrecognized images, (c) a step in which images that are related to one another among the images stored in the database for unrecognized images are grouped based on degrees of similarity to organize sets of images, and (d) a step in which, if a specific image and its tag information are inputted from outside, at least some images included in a specific set of images among the organized sets of the images are compared with the specific image inputted to determine whether it has a degree of similarity exceeding a pre-set threshold value, and, if it is determined to have the degree of similarity exceeding the pre-set threshold value, at least some images are allowed to be automatically added to the image database with the tag information inputted.

In accordance with another aspect of the present invention, there is provided a system for adding a new image and its information into an image database comprising, a search part that, if a queried image is inputted, matches a pre-stored image in the image database with the queried image in the image database to research whether there are any images similar to the queried image in the image database, an unrecognized image storing part that, if there is no image similar to the queried image based on the search result, stores the queried image in a database for unrecognized images, an unrecognized image set organizing part that groups images that are related to one another among the images stored in the database for unrecognized images based on the search result, stores the queried image in a database for unrecognized images, an unrecognized image set organizing part that groups images that are related to one another among the images stored in the database for unrecognized images based on degrees of similarity to organize sets of images, and a new image adding part that, if a specific image and its tag information are inputted from outside, and compares it with at least some images included in a specific set of images among the organized sets of images to determine whether it has a degree of similarity exceeding a pre-set threshold value, allows at least some images to be automatically added to the image database with the tag information inputted.

In addition, other methods, systems, and computer-readable recording media for recording a computer program to execute the methods that are intended to implement the present invention are further provided.

### Effects of the Invention

In accordance with the present invention, in such a case that sufficient data are not included in an image database, any unrecognized images that failed to match images stored in the image database are not abandoned but recycled and may be reasonably used to match the queried image to be newly inputted later so that an automatically evolving image database may be ultimately and effectively implemented.

### Brief Description of the Drawings

Figure 1 is a drawing that schematically shows a configuration of a whole system for adding a new image and its information into an image database in accordance with an example embodiment of the present invention.

Figure 2 is a drawing that illustratively represents an internal configuration of the image processing system (200) in accordance with an example embodiment of the present invention.

Figure 3 illustrates organization of image sets by grouping images stored in a database for unrecognized images based on degrees of similarity among the images stored in the image database at the unrecognized image set organizing part in accordance with an example embodiment of the present invention.

Figure 4a and Figure 4b illustrate an example embodiment in which an unrecognized image set organizing part groups images with similarity among the images stored in a database for unrecognized images to organize image sets in accordance with an example embodiment of the present invention.

Figure 5 is a drawing that illustratively represents the configuration of normalizing feature regions in accordance with an example embodiment of the present invention.

Figure 6 is a drawing that illustratively represents the distribution of feature regions included in an image collected by a web crawler and an image included in a set of images in accordance with an example embodiment of the present invention.

<Description of Reference Numerals>

- 100:: communication network

- 200:: image processing system

- 210:: search part

- 220:: unrecognized image storing part

- 230:: unrecognized image set organizing part

- 240:: new image adding part

- 250:: image database

- 260:: database for unrecognized images

- 270:: communication part

- 280:: control part

- 300:: user terminal

### Forms for Embodiment of the Invention

The attached figures are examples that will help explain the invention in detail. These examples are described in sufficient detail to enable those skilled in the art to practice the invention. It is to be understood that the various examples of the invention, although different, are not necessarily mutually exclusive. For example, a particular feature, structure, or characteristic described herein in connection with one example may be implemented within other examples without departing from the spirit and scope of the invention. In addition, it is to be understood that the location or arrangement of individual elements within each disclosed example may be modified without departing from the spirit and scope of the invention. The following detailed description is, therefore, not to be taken in a limiting sense, and the scope of the present invention is defined only by the appended claims, appropriately interpreted, along with the full range of equivalents to which the claims are entitled. In the drawings, like numerals refer to the same or similar functionality throughout the several views.

In the following is described the present invention in detail referring to the preferred examples of the present invention so that those having common knowledge of the technical field to which the present invention belongs may easily practice the present invention.

[Preferred Embodiments of the Present Invention]

Configuration of Whole System

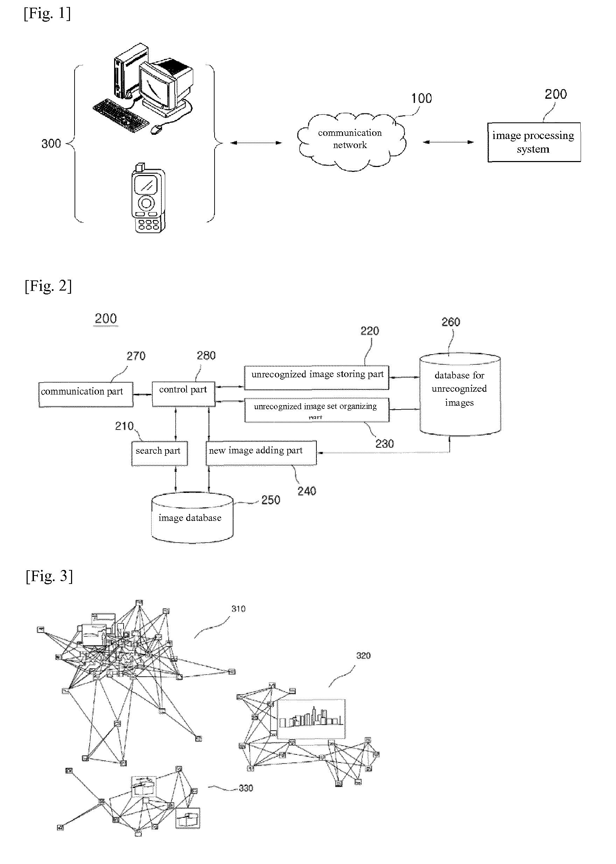

Figure 1 is a drawing that schematically shows the configuration of a whole system for adding a new image and its information into an image database in accordance with an example embodiment of the present invention.

As illustrated in Figure 1, the whole system in accordance with an example embodiment of the present invention may comprise a communication network (100), an image processing system (200) capable of adding a new image and its information into an image database, and a user terminal (300).

First of all, the communication network (100) may be configured, regardless of wired or wireless, in a variety of networks, including a local area network (LAN), a metropolitan area network (MAN), a wide area network (WAN), etc. More preferably, the communication network (100) in the present invention may be the World Wide Web (www).

In accordance with an example embodiment of the present invention, the image processing system (200) capable of adding a new image and its information to an image database is described below. If a queried image is inputted from a user terminal (300) through a communication network (100), may match the pre-stored image in an image database with the queried image to search whether there is any image similar to the queried image in the image database, and, if there is no similar image based on the search result, it performs a function of storing the queried image in a database for unrecognized images. At the time, it may browse whether there is an image similar to the queried image in the image database by matching normalized feature regions of the pre-stored images in the image database with normalized feature regions of the queried image.

In addition, the image processing system (200) in accordance with an example embodiment of the present invention, may group images that are associated with one another, and are stored in the database for unrecognized images based on degrees of similarity to organize sets of images. At the time, if a specific image and its tag information (i.e., information corresponding to an applicable image) is acquired from outside (e.g., a web crawler or a user terminal), the image processing system (200) may compare the specific image with images in a specific set of images among the above-mentioned sets of images and determine whether at least some of the images in the specific set of images have degrees of similarity exceeding the pre-set threshold value and, if the image is determined to have the degree of similarity exceeding the pre-set threshold value, may allow at least some of the images in the specific set of images and the tag information acquired to be automatically added to the image database to be explained below.

Specifically, if data of an image set (data in the specific set of images or all data stored in the database for unrecognized images) are collected exceeding the preset number of data, the image processing system (200) in accordance with an example embodiment of the present invention may determine whether at least some of the images in the specific set of images are associated with the crawled data and/or data inputted by a user by referring to the crawled data and/or data inputted by a user (e.g., image and its tag information) and, if they are determined to have connections, may perform a function to add into the image database at least some of images with the crawled tag information and/or tag information inputted by a user. The detailed explanation on the internal configuration of the image processing system (200) will be explained below.

On the other hand, the user terminal (300) in accordance with an example embodiment of the present invention is a digital device which includes a function to enable the user to access and communicate the image processing system (200) and any digital devices, including a personal computer (e.g., desktop, notebook computer, etc.), a workstation, a PDA, a web pad, a cellular phone, which have memory capability and microprocessors with calculation ability, may be adopted as the user terminal (300) in accordance with the present invention.

Configuration of Image Processing System

In the following are examined the internal configuration and function of each component of the image processing system (200) which performs an important function for implementation of the present invention.

Figure 2 is a drawing that illustratively represents an internal configuration of the image processing system (200) in accordance with an example embodiment of the present invention.

By referring to Figure 2, the image processing system (200) in accordance with an example embodiment of the present invention may include a search part (210), an unrecognized image storing part (220), an unrecognized image set organizing part (230), a new image adding part (240), an image database (250), a database for unrecognized images (260), a communication part (270) and a control part (280).

In accordance with an example embodiment of the present invention, the search part (210), the unrecognized image storing part (220), the unrecognized image set organizing part (230), the new image adding part (240), the image database (250), the database for unrecognized images (260), the communication part (270) and the control part (280) may be program modules at least some of which may communicate with the user terminal (300). Such program modules may be included in the image processing system (200) in the form of an operating system, an application program module and other program modules, or they may be physically stored in a number of memory devices. In addition, such program modules may also be stored in a remote storage device capable of communicating with the image processing system (200). On the other hand, such program modules include but are not limited to a routine, a subroutine, a program, an object, a component, and a data structure for executing a specific operation or a type of specific abstract data that will be described in accordance with the present invention.

First, if a queried image is inputted, the search part (210) in accordance with an example embodiment of the present invention performs a function of matching the queried image with images already stored in the image database (250) and searching whether there are any images similar to the queried image in the image database (250) or not.

Specifically, the search part (210) in accordance with an example embodiment of the present invention may perform a function of comparing a normalized feature region(s) of the already stored images in the image database (250) with normalized feature region(s) of the queried image and searching whether there are any images similar to the queried image in the image database (250) or not.

Herein, the search part (210), the unrecognized image set organizing part (230) to be described later and the new image adding part (240) may be allowed to pre-extract feature(s) and feature region(s) from images for matching among images. Herein, the feature means a point including a feature element of an object included in the image, and the feature region means an area around the feature which includes characteristics of the object and may be set to be robust to changes in a viewpoint and an illumination of the image.

As mentioned above, to extract a feature and a feature region from the image, a feature extraction technology is required. In accordance with an example embodiment of the present invention, an article entitled "A combined corner and edge detector" authored jointly by C. Harris and one other and published in "In Alvey Vision Conference" in 1988 and the like may be referred to as such feature recognition technology (the whole content of the article should be considered to have been combined in the present specification). The article describes a method for guessing elliptic feature regions by using a second moment matrix which represents slope distributions around the feature. Of course, the feature extraction technology applicable to the present invention is not limited only to the method mentioned in the article and various modified examples can be applied to implement the present invention.

Next, if there is no image similar to the queried image in the image database (250) based on a search result by the search part (210), the unrecognized image storing part (220) in accordance with an example embodiment of the present invention performs a function of storing the queried image in the database for unrecognized images (260).

In addition, the unrecognized image set organizing part (230) in accordance with an example embodiment of the present invention performs a function of grouping images with high relevance by referring to degrees of similarity of the images among the images stored in the database for unrecognized images (260) (e.g., the degrees of similarity higher than the pre-set value) and organizing sets of the images. More specifically, the unrecognized image set organizing part (230) performs a function of comparing features or feature regions of the images stored in the database for unrecognized images (260), and grouping the images considered to have degrees of similarity to organize sets of the images.

Figure 3 illustrates organization of image sets by grouping images stored in a database for unrecognized images (260) based on degrees of similarity among the images stored in the image database at the unrecognized image set organizing part (230) in accordance with an example embodiment of the present invention. By referring to Figure 3, such example embodiment is shown that the unrecognized image set organizing part (230) groups the images stored by the unrecognized image storing part (220) based on degrees of similarity of images stored in the database for unrecognized images (260) to organize image sets like 310, 320, and 330.

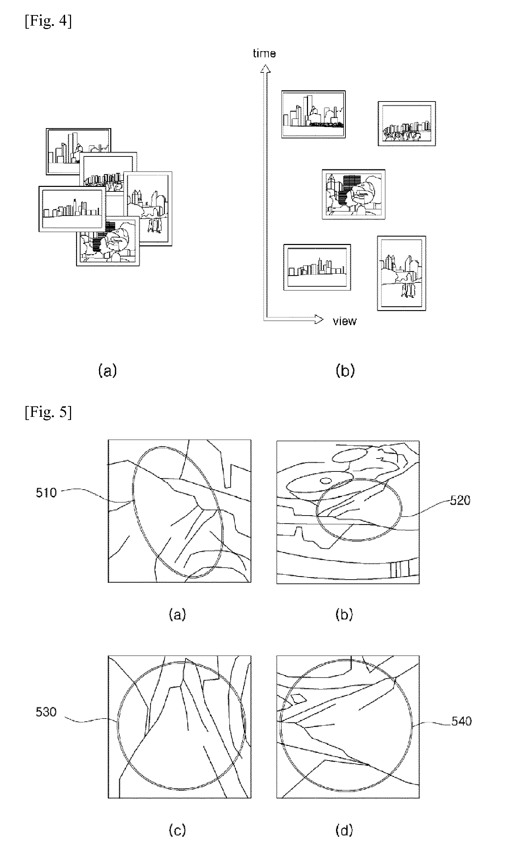

In addition, Figure 4a and Figure 4b illustrate such an example embodiment that the unrecognized image set organizing part (230) in accordance with an example embodiment of the present invention groups images with high degrees of similarity among the images stored in the database for unrecognized images (260) to organize image sets. By referring to Figures 4a and 4b, the unrecognized image set organizing part (230) in accordance with an example embodiment of the present invention first group images that are found to be similar images by applying an image matching scheme as shown in Figure 4a. Next, in order to organize the grouped images as sets of structure images as shown in Figure 4a, the unrecognized image set organizing part (230) in accordance with an example embodiment of the present invention may array, structure and store the grouped images by time and by a variety of viewpoints. Figure 4b illustrates such one example embodiment that the unrecognized image set organizing part (230) in accordance with an example embodiment of the present invention arrays and structures images by time and by a variety of viewpoints but it is not necessary to be limited to this case. And, it is possible for the unrecognized image set organizing part (230) to organize image sets in a variety of methods.

In accordance with an example embodiment of the present invention, if a specific image and its tag information is acquired from a web crawler (not illustrated) or from a user terminal (300) or the like, the new image adding part (240) performs a function of comparing the specific image with at least some images included in a specific set of images and determining whether they have degrees of similarity exceeding the pre-set threshold value or not and, if it is determined that the degrees of similarity are in excess of the pre-set threshold value, performs a function of allowing at least some images with the acquired tag information to be automatically added into the image database (250). At the time, if the number of data included in the specific sets of images by the unrecognized image set organizing part (230) is sufficiently collected to exceed a preset number or if the number of data included in the database for unrecognized images (260) is sufficiently collected to exceed a preset number, the new image adding part (240) in accordance with an example embodiment of the present invention may allow analysis operations (i.e., image matching operations) to be performed.

On the other hand, because the images collected by a web crawler, etc. and the images included in the set(s) of images, which are subject to matching, may be images photographed from different viewpoints in different luminance environments when the new image adding part (240) performs an image matching operation as above, even the feature region included in each of the images may be differently extracted in size and shape depending on the viewpoints and the luminance. Therefore, it might be difficult to match the images accurately only by directly comparing the feature regions of the images collected by the web crawler, etc. and those of the images included in the set(s) of images. The images collected by the web crawler hereby are assumed for convenience but the images collected by the user terminal (300) may be necessarily included.

Therefore, to solve the problem caused by the extractions of feature regions whose size and shape are dependent on the viewpoints and the luminance, the new image adding part (240) in accordance with an example embodiment of the present invention may normalize the size and the shape of each of the feature regions included, respectively, in the images collected by the web crawler, etc. and in the images in the set(s) of images and then perform image matching based on each of the normalized feature regions to thereby compensate errors caused by various viewpoints and luminance.

Figure 5 is a drawing that illustratively represents the configuration of normalizing feature regions in accordance with an example embodiment of the present invention. In Figure 5, the image (a) shows the feature region A (510) extracted from the images collected by a web crawler, etc. and the image (b) of Figure 5 shows the feature region B (520) extracted from the images included in the set of images. Examining the images (a) and (b) of Figure 5, it may be found that, although each image shows the same object, the same feature region of the same object is displayed differently in size and shape due to different viewpoints or luminance so that feature regions (510, 520) of different sizes and shapes are extracted from the same feature part of the image that belongs to the images and sets of images collected by a web crawler, etc.

In accordance with an example embodiment of the present invention, the new image adding part (240) may normalize a pair of feature regions with different sizes and shapes as a pair of feature regions with same size and shape by using a normalization technology. Accordingly, a pair of feature regions (510, 520) as shown in images (a) and (b) of Figure 5 may be normalized as a pair of feature regions (530, 540) as shown in images (c) and (d) of Figure 5.

On the other hand, to normalize each feature region extracted from the images, technology of normalizing a feature region is required. As such technology of normalizing a feature region, in accordance with an example embodiment of the present invention, an article entitled "A Comparison of Affine Region Detectors" authored by K. MIKOLAJCZYK and seven others and published in the "International Journal of Computer Vision" in November 2005 and the like may be referred to (the whole content of the article must be considered to have been combined in the present specification). The article describes a method for normalizing elliptic feature regions in various sizes and shapes as circles in a specific size and a specific shape by using second moment matrices M_{L}^{1/2} and M_{R}^{1/2}, which guesses the viewpoints and the luminance conditions of the images, and a method for rotating the normalized feature region by using a rotation matrix R to determine whether a pair of normalized feature regions point out the same object or not. Of course, the normalization technology applicable to the present invention is not limited to the method described in the above article and various modified examples can be applied to implement the present invention.

Moreover, the new image adding part (240) in accordance with an example embodiment of the present invention may compare at least one normalized feature region of an image in the set of images with at least one normalized feature region of the collected image and retrieve at least one pair of feature regions from each of the images which are considered to indicate the same object. In addition, if at least two pairs of feature regions are retrieved, the new image adding part (240) in accordance with an example embodiment of the present invention may compare relative location relationships between at least two feature regions of the image in the set of images, which correspond to at least two pairs of feature regions, and relative location relationships between at least two feature regions of the collected image, which correspond to at least two pairs of feature regions, by using topology and determine whether the image in the set of images matches with the collected image by referring to the above comparison results.

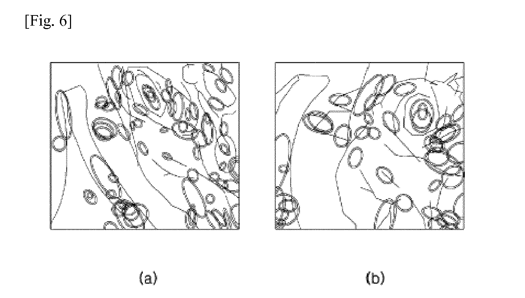

Figure 6 is a drawing that illustratively represents the distribution of feature regions included in an image collected by a web crawler and an image included in a set of images in accordance with an example embodiment of the present invention. By referring to Figure 6, the new image adding part (240) in accordance with an example embodiment of the present invention may determine whether there is similarity between both images by comparing the relative location relationships of multiple feature regions on the image (i.e., image (a)) collected by a web crawler, etc. with the relative location relationships of the image (i.e., image (b)) in the set of images.

On the other hand, as mentioned above, to determine the degree of similarity between two different images by using relative location relationships of the feature regions, a technology of topology is required. In accordance with an example embodiment of the present invention, as such technology of topology, an article entitled "Image matching using algebraic topology" authored by DERDAR Salah and two others and published in "Proceedings of SPIE, Vol. 6066" in January 2006 and so on may be referred to (the whole content of the article must be considered to have been combined in the present specification). The aforementioned article describes a method for measuring a degree of similarity between two images by referring to boundary elements of features included in each of the images through algebraic topology technology. Of course, the topology technology applicable to the present invention is not limited to the method described in the above-mentioned article and various modified examples can be applied to implement the present invention.

As explained above, in accordance with the image matching method of the present invention, an effect of improving accuracy of matching between the image collected by the web crawler, etc. and the image included in the set of images can be achieved.

On the other hand, when a new image and its information are added to the image database (250), the new image adding part (240) in accordance with an example embodiment of the present invention may add n pieces of representative images and a representative tag awarded to the representative images. Furthermore, the new image adding part (240) in accordance with an example embodiment of the present invention may also add m pieces of sub images which reflect on different viewpoints or different times while it is adding the representative images. Herein, the representative image and the sub image refer to an image with a relationship that shares one or more features or feature regions.

In addition, the image database (250) in accordance with an example embodiment of the present invention is a database including the images for which verification has been completed and their tag information, and the database for unrecognized images (260) is a database which stores queried images which failed in matching as a result of retrieval of the image database (250) by the search part (210).

On the other hand, the image database (250) and the database for unrecognized images (260) are databases not only in a narrow meaning but also in a broad meaning which include data records, etc. based on computer file systems. Hence, it must be understood that even a set of simple operation processing logs may be included in the database in the present invention if it can be browsed and data can be extracted. Although the image database (250) and the database for unrecognized images (260) are illustrated in Figure 2 as if they are included in the image processing system (200), the image database (250) and the database for unrecognized images (260) could be configured separately from the image processing system (200) at the necessity of a person skilled in the art who implements the present invention.

On the other hand, the communication part (270) in accordance with an example embodiment of the present invention performs a function of enabling the image processing system (200) to communicate with an external device such as the user terminal (300).

In addition, the control part (280) in accordance with an example embodiment of the present invention performs a function of controlling data flow among the search part (210), the unrecognized image storing part (220), the unrecognized image set organizing part (230), the new image adding part (240), the image database (250), the database for unrecognized images (260) and the communication part (270). In other words, the control part (280) controls the flow of data from outside or among the components of the image processing system (200) to thereby force the search part (210), the unrecognized image storing part (220), the unrecognized image set organizing part (230), the new image adding part (240), the image database (250), the database for unrecognized images (260) and the communication part (270) to perform their unique functions.

On the other hand, in accordance with an example embodiment of the present invention, the whole image processing system (200) or at least a part of its components, including the search part (210), the unrecognized image storing part (220), the unrecognized image set organizing part (230), the new image adding part (240), the image database (250), the database for unrecognized images (260), the communication part (270) and the control part (280), may be implemented by a cloud computing server that virtualizes multiple server devices sharing computing resources or server resources.

The examples described above according to the present invention can be implemented in a form of program command that may be executed through a variety of computer components and recorded on a computer-readable recording media. The computer readable media may include solely or in combination, program commands, data files and data structures. The program commands recorded on the computer-readable recording medium may be specially designed and configured for the present invention or may be known to and usable by a person skilled in the field of computer software.
Examples of the computer-readable recording medium include magnetic media such as a hard disk, floppy disk, and magnetic tape; optical media such as a CD-ROM and DVD; magnetooptical media such as a floptical disk; and hardware devices such as a ROM, RAM and flash memory specially configured to store and execute program commands. Program commands include not only a machine language code made by a complier but also a high level code that can be used by an interpreter etc., which is executed by a computer. The hardware device may be configured to work as one or more software modules to perform the action according to the present invention, and its reverse is also the same.

While the present invention has been described so far by certain details such as specific components and limited examples and drawings, they were merely provided to promote overall understanding of the present invention, and the present invention is not limited by the examples above. A person with common knowledge of the field to which the present invention belongs may attempt various modifications and changes based on such descriptions.

Therefore, the idea of the present invention must not be confined to the explained examples, and the claims to be described later as well as everything including variations equal or equivalent to the claims would belong to the category of the idea of the present invention.

## Claims

1. A method for adding a new image and its information into an image database comprising,
(a) a step in which, if a queried image is inputted, a pre-stored image in the image database is matched with the queried image to research whether there are any images similar to the queried image in the image database;
(b) a step in which, if there is no image similar to the queried image based on the search result, the queried image is stored in a database for unrecognized images,
(c) a step in which images that are related to one another among the images stored in the database for unrecognized images are grouped based on degrees of similarity to organize sets of images, and
(d) a step in which, if a specific image and its tag information are inputted externally, at least some images included in a specific set of images among the organized sets of the images are compared with the specific image inputted to determine whether it has a degree of similarity exceeding a pre-set threshold value, and, if it is determined to have a degree of similarity exceeding the pre-set threshold value, at least some images are allowed to be automatically added to the image database with the tag information inputted.

2. The method recited in Claim 1 wherein, in step (d), the specific image and its tag information are received from a web crawler or a user terminal.

3. The method recited in Claim 1 wherein, in step (a), if the queried image is inputted, it is searched whether there is any image similar to the queried image or not by comparing a normalized feature region of the pre-stored image in the image database with a normalized feature region of the queried image.

4. The method recited in Claim 1 wherein, in step (c), the degrees of similarity are determined by comparing features or feature regions of the images in the database for unrecognized images in order to organize the set of images.

5. The method recited in Claim 1 wherein,in step (c), if the number of data included in the specific set of images or the number of data recorded in the database for unrecognized images is collected by exceeding the preset number, step (d) is performed.

6. The method recited in Claim 1 wherein, in step (d), at least one normalized feature region of an image in the specific set of images are compared with at least one normalized feature region of the inputted specific image, at least one pair of feature regions which are considered to indicate the same object are retrieved from each of the images, and determination of the degree of similarity between the specific image and the image in the specific set of images is performed.

7. The method recited in Claim 6 wherein, in step (d), if at least two pairs of feature regions are retrieved, relative location relationships between at least two feature regions of the image in the specific set of images, which correspond to at least two pairs of feature regions and relative location relationships between at least two feature regions of the inputted specific image which corresponds to at least two pairs of feature regions are compared by using a topology technology to determine whether the image in the specific set of images and the inputted specific image are matched or not.

8. The method recited in Claim 1 wherein, in step (d), n pieces of representative images, which represent at least some images in the specific set of images, and their representative tags corresponding to the representative images are added into the image database.

9. The method recited in Claim 8 wherein m pieces of sub images reflecting different viewpoints or different times from the representative images are added together.

10. The method recited in Claim 9 wherein, when the sub images are added, their sub tags with respect to the sub images are further added.

11. The method recited in Claim 9 wherein the representative images and the sub images share at least one feature or feature region.

12. The method recited in Claim 1 wherein at least one of the steps (a), (b), (c), and (d) is executed by a cloud computing server, which virtualizes multiple server devices sharing computer resources or server resources.

13. A system for adding a new image and its information into an image database comprising,
a search part that, if a queried image is inputted, matches a pre-stored image in the image database with the queried image in the image database to research whether there are any images similar to the queried image in the image database, an unrecognized image storing part that, if there is no image similar to the queried image based on the search result, stores the queried image in a database for unrecognized images, an unrecognized image set organizing part that groups images that are related to one another among the images stored in the database for unrecognized images based on the search result, stores the queried image in a database for unrecognized images,
an unrecognized image set organizing part that groups images that are related to one another among the images stored in the database for unrecognized images based on degrees of similarity to organize sets of images, and
a new image adding part that, if a specific image and its tag information are inputted externally, compares at least some images included in a specific set of images among the organized sets of the images with the specific image inputted to determine whether it has a degree of similarity exceeding a pre-set threshold value, allows at least some images to be automatically added to the image database with the tag information inputted.

14. The system recited in Claim 13 wherein the article is a crawler or a user terminal.

15. The system recited in Claim 13 wherein, if the queried image is inputted, the search part searches whether there is any image similar to the queried image or not by comparing a normalized feature region of the pre-stored image in the image database with a normalized feature region of the queried image.

16. The system recited in Claim 13 wherein the unrecognized image storing part determines the degrees of similarity by comparing features or feature regions of the images in the database for unrecognized images in order to organize the set of images.

17. The system recited in Claim 13 wherein, if the number of data of the specific set of images collected by the unrecognized image set organizing part or the number of data recorded in the database for unrecognized images is in excess of the preset number, the new image adding part automatically adds at least some images with the inputted tag information in the image database.

18. The system recited in Claim 13 wherein the new image adding part compares normalized feature regions of an image in the specific set of images with at least one normalized feature image of the inputted specific image, retrieves at least one pair of feature regions which are considered to indicate the same object from each of the images, and determines the degree of similarity between the specific image and the image in the specific set of images.

19. The system recited in Claim 18 wherein, if at least two pairs of feature regions are retrieved, the new image adding part compares relative location relationships between at least two feature regions of the image in the specific set of images, which correspond to at least two pairs of feature regions and relative location relationships between at least two feature regions of the inputted specific image which corresponds to at least two pairs of feature regions by using a topology technology to determine whether the image in the specific set of images and the inputted specific image are matched or not.

20. The system recited in Claim 13 wherein n pieces of representative images, which represents at least some images in the specific set of images, and their representative tags corresponding to the representative images are added into the image database.

21. The system recited in Claim 20 wherein m pieces of sub images reflecting different viewpoints or different times from the representative images are added together.

22. The system recited in Claim 21 wherein, when the sub images are added, their sub tags with respect to the sub images are further added.

23. The system recited in Claim 21 wherein the representative images and the sub images share at least one feature or feature region.

24. The system recited in Claim 13 wherein the system is run by a cloud computing server that virtualizes multiple server devices sharing computing resources or server resources.

25. A computer-readable recording medium in which a computer program is recorded to execute the method according to any one of Claims 1 to 12.
